# EUROPÄISCHE PATENTSCHRIFT

(11) **EP 3 204 443 B1**
(45) Veröffentlichungstag und Bekanntmachung des Hinweises auf die Patenterteilung: **26.09.2018**
(21) Anmeldenummer: 16741629.6
(22) Anmeldetag: 21.07.2016
(51) Int. Cl.: C08G 77/06, C07F 7/08, C08G 77/18

(54) **VERFAHREN ZUR HERSTELLUNG VON ORGANOPOLYSILOXANEN**
PROCESS FOR PREPARING ORGANOPOLYSILOXANES
PROCÉDÉ DE PRODUCTION DE POLYORGANOSILOXANES

(30) Priorität: 30.07.2015 DE 102015214503
(43) Veröffentlichungstag der Anmeldung: 16.08.2017
(73) Patentinhaber: Wacker Chemie AG, 81737 München (DE)
(72) Erfinder: SANDMEYER, Frank, 84508 Burgkirchen (DE); LÖSSEL, Georg, 84547 Emmerting (DE); PRASSE, Marko, 01612Glaubitz (DE)
(74) Vertreter: Mieskes, Klaus Theoderich
(86) Internationale Anmeldenummer: PCT/EP2016/067377
(87) Internationale Veröffentlichungsnummer: WO 2017/016967

(56) Entgegenhaltungen:
- EP-A2- 1 205 505

## Beschreibung

Die Erfindung betrifft ein teil- oder voll-kontinuierliches Verfahren zur Herstellung von verzweigten Organopolysiloxanen, aus Chlorsilanen über zwei Stufen durch Umsetzung mit Alkohol und Wasser zum gewünschten Kondensationsgrad, wobei das gesamte Verfahren ohne die Verwendung zusätzlicher organischer Lösemittel auskommt, kein Abwasser erzeugt wird und das Verfahren besonders geeignet ist für die kontrollierte, vergelungsfreie Kondensation sehr reaktiver Chlorsilane bzw. Chlorsilangemische.

Verfahren zur Herstellung von verzweigten Organopolysiloxanen, auch als Siliconharze bezeichnet, sind seit langem Stand der Technik.

Gegenüber der Hydrolyse von Alkoxysilanen zur Herstellung von Organopolysiloxanen (siehe beispielsweise DE1302773) hat die Hydrolyse von Chlorsilanen ausgehend den Vorteil, dass die Herstellung und Isolierung der Alkoxysilane entfällt, wodurch sich wirtschaftliche Vorteile ergeben.

Sowohl kontinuierliche als auch diskontinuierliche Verfahren zur Herstellung von Organopolysiloxanen aus Chlorsilanen sind aus zahlreichen Publikationen und Patentschriften im Stand der Technik seit langem bekannt.

An dieser Stelle sei auf die Patentschriften GB1192506**,** DE953661C**,** DE854708C **und** DE2415331 A**,** US2005288473 als Beispiele für diskontinuierliche Verfahren verwiesen. Nachteilig ist an diesen Verfahren die notwendige hohe Verdünnung während der Reaktion, die durch die hohe Reaktivität der Chlorsilane bedingt ist. Ein weiterer Nachteil der Verfahren ist in den großen Wasserüberschüssen begründet, die am Ende der Reaktion zur Phasenseparierung führt, wobei dabei freiwerdende Salzsäure in der wässrigen Phase aufgenommen oder neutralisiert wird. Großtechnisch gesehen ist damit zum Einen eine hohe Abfallmenge zu entsorgen und zum Anderen geht die Salzsäure verloren, da sie nur unter unwirtschaftlichen Bedingungen rückgewinnbar ist.

Exemplarisch für kontinuierliche Chlorsilanhydrolysen sei auf US3489782**,** DE954198**,** DE102005047394 A1**,** DE102009045930 A1 **und** DE102007004838 A1 verwiesen. Auch bei diesen Verfahren werden große Mengen an Wasser benötigt, welche zu den oben genannten Abwasserproblemen führt und auch hier ist die wassergelöste Salzsäure wiederum nur unter unwirtschaftlichen Bedingungen rückgewinnbar.

Neben diesen diskontinuierlichen und kontinuierlichen Verfahren, haben sich auch Technologien mittels einer Kolonne etabliert. Diese Kolonnenverfahren ermöglichen eine deutlich verbesserte Reaktionsführung. So werden keine Abwasserphasen mehr erzeugt und die frei werdende Salzsäure kann als Gas am Kolonnenkopf zurückgewonnen werden. Entsprechende Verfahren sind in US2719859**,** US3792071**,** US4298753**,** US6767982**,** US5223636 **und** US4209454 beschrieben. Ein gemeinsamer Nachteil all dieser Verfahren ist, dass sie ausschließlich zu niederkondesierten Oligomeren führen. Hochkondensierte Polyorganosiloxane sind mit diesen Verfahren nicht zugänglich.

US2719859 lehrt ein Verfahren zur Herstellung von Polyorganosiloxanen in einer Kolonne, das dadurch gekennzeichnet ist, dass die hydrolysierbaren Silane fein verteilt in einen kontinuierlichen Strom eines wässrigen Hydrolysemediums eingebracht werden, wobei das Hydrolysemedium stets im Überschuss vorhanden ist. Das Verfahren benötigt große Mengen Wasser, die später als Abwasser aufzubereiten oder zu entsorgen sind. Da das Hydrolysemedium stets im Überschuss eingesetzt und zum Produktaustrag verwendet wird, ist die verwendete Kolonnenapparatur stets zu einem erheblichen Teil mit dem Hydrolysemedium gefüllt, was eine niedrige Raum-Zeit-Leistung zur Folge hat. Silane, die sich zu zyklischen Polysiloxanen stabilisieren können, oder Silanmischungen, die eine ausreichende Menge an Endstoppern enthalten, können hier lösemittelfrei eingesetzt werden. Netzwerkbildende Silane, die bei vollständiger Kondensation T- oder Q-Einheiten bilden, können nur verdünnt in inerten Lösemitteln und in Gegenwart weniger reaktiver Silane eingesetzt werden ohne unlösliche Gele zu bilden, was die Aufarbeitung weiter erschwert und die Bandbreite der Anwendbarkeit des Verfahrens signifikant beschränkt.

US3792071 lehrt ein kontinuierliches Verfahren zur Herstellung von Alkoxysilanen oder niederkondensierten Alkoxypolyorganosiloxanen aus Chlorsilanen. Das Verfahren wird ausgeübt unter Verwendung einer Destillationskolonne als Reaktionsgefäß. In die Kolonne werden an verschiedenen Stellen das Chlorsilan, ein zur Alkoxylierung benötigter Alkohol und für die Kondensation zur Herstellung von Polyorganosiloxanen benötigtes Wasser eingespeist. Das Chlorsilan wird am Kolonnenkopf aufgegeben, der Alkohol in einem Kolonnenteil darunter oder im unteren Drittel der Kolonne. Da die Innentemperatur der Kolonne im größten Teil der Kolonne stets mindestens ein halbes Grad über dem Siedepunkt des Alkohols gehalten wird, ist dieser in der Kolonne gasförmig und trifft im Gegenstrom auf das sich abwärtsbewegende Chlorsilan. Für die Herstellung von Alkoxysilanen wird bei diesem Verfahren kein Lösemittel und kein Wasser benötigt. Für Herstellung von kondensierten Polyorganosiloxanen benötigt man in diesem Verfahren beides, somit ist neben dem ohnehin vorhandenen Alkohol ein weiteres inertes organisches Lösemittel wie Toluol in der Kolonne vorhanden, dessen Siedepunkt über dem des verwendeten Alkohols liegt. Das Lösemittel wird in die Kolonne eingebracht, indem das Chlorsilan im Lösemittel gelöst und als Lösung in die Kolonne eingespeist wird. Wasser und Alkohol werden bei einer Temperatur in die Kolonne eingespeist, die knapp über ihrer Siedetemperatur liegt, so dass sie in die Kolonne gasförmig eingespeist werden.
Das Chlorsilan besitzt Umgebungstemperatur bevor es in die Kolonne eingespeist wird.
Es wird stets ein molarer Überschuss an Alkohol bezogen auf die eingesetzten Mole siliziumgebundenes Chlor verwendet.
Das Verfahren zeichnet sich dadurch aus, dass in den erhaltenen Produkten ein sehr niedriger Restsäuregehalt im einstelligen ppm-Bereich erhalten wird, ohne dass hierfür eigene Neutralisations- oder Waschschritte im Anschluss an den Kolonnenprozess erforderlich sind.
Nachteilig bei diesem Prozess ist die geringe Raum-Zeit-Leistung, die Polymerisationsanfälligkeit olefinisch ungesättigter Silane unter den Reaktionsbedingungen des Verfahrens (wie in den Vergleichsbeispielen A und B in US4298753 gezeigt) und die Tatsache, dass für die Kondensation zu Polyorganosiloxanen ein inertes organisches Lösemittel eingesetzt werden muss, dass später schwierig zu entfernen ist. Lösemittelintolerante Anwendungen wie Personal Care können daher mit solchen Produkte nicht bedient werden oder die Restspuren von Lösemittel müssen mit erheblichem Aufwand aus den Produkten entfernt werden, was sie unwirtschaftlich macht. Ein weiterer Nachteil liegt darin, dass die Kolonne stets bei erhöhter Temperatur betrieben wird und da einige Chlorsilane wie etwa das Methyltrichlorsilan relative niedrige Siedepunkte besitzen, werden Gemische verschiedener Chlorsilane in der Kolonne voneinander getrennt und somit in eher zufälligen Verhältnissen miteinander reagieren, so dass es mit diesem Verfahren schwerer ist, aus Chlorsilanmischungen ein Polyorganosiloxan in konstanter Zusammensetzung herzustellen.

US4209454 lehrt ein kontinuierliches Verfahren zur Herstellung von Polyorganoalkoxysiloxanen. Bei diesem Verfahren werden Chlorsilane direkt auf eine Kolonne aufgegeben, die auf einen Reaktor aufgesetzt ist. Die Aufgabe der Chlorsilane muss in einem bestimmten Mindestabstand vom Reaktor erfolgen, um eine ausreichend lange Reaktionszeit zu gestatten. Der Reaktor enthält Alkohol, Wasser und das herzustellende Polyorganosiloxan. Ein weiteres Lösemittel ist in der Apparatur nicht enthalten. Der Inhalt des Reaktors wird zum Sieden erhitzt, so dass der Alkohol und ggf. Wasser mit dem Chlorsilan im Gegenstrom zusammentreffen.
Der Vorteil dieses Verfahrens besteht darin, dass es hier möglich ist, den Alkoxygehalt besser zu steuern als in anderen Verfahren, die eine ähnliche Vorgehensweise vorschlagen, wie etwa GB674137, so dass die Neigung zur Gelbildung bei dieser Vorgehensweise besser beherrscht wird, wie die Beispiele von US4209454 insbesondere gegen GB674137 belegen.
Allerdings ist dieses Verfahren ist nicht tolerant gegenüber olefinisch ungesättigten siliziumgebundenen Substituenten.
Da die Kolonne stets bei Siedetemperatur der verdampfbaren Bestandteile aus dem Reaktor betrieben wird und einige Chlorsilane wie etwa das Methyltrichlorsilan relative niedrige Siedepunkte besitzen, werden Gemische verschiedener Chlorsilane, wie etwa Phenyltrichlorsilan und Methyltrichlorsilan in der Kolonne voneinander getrennt und ein Teil davon ins Abgas abgegeben und sind somit verloren. Dadurch zeigt das Verfahren eine schlechtere Wirtschaftlichkeit, da höhere Eduktmengen je Mengeneinheit Produkt erforderlich sind. Zudem können Verschiebungen in der stöchiometrischen Zusammensetzung nicht ausgeschlossen werden, so dass es auch mit diesem Verfahren schwerer ist, aus Chlorsilanmischungen ein Polyorganosiloxan in konstanter Zusammensetzung herzustellen.

US4298753 lehrt ein zweistufiges Alkoxylierungsverfahren, bzw. ein zweistufiges Alkoxylierungs- und Kondensationsverfahren zur Herstellung von Alkoxysilanen oder niederkondensierten Polyorganoalkoxysiloxanen, bei dem für die zweite Kondensationsstufe eine Kolonne verwendet wird. Die erste Kondensationsstufe wird ebenfalls kontinuierlich ausgeführt, wofür ein der Kolonne vorgeschalteter Reaktor verwendet wird, der ein Rührwerk oder ein Loop sein kann. In diesen Vorreaktor werden das Chlorsilan und der Alkohol parallel eindosiert, wobei der Alkohol in unterstöchiometrischer Menge bezogen auf die Menge hydrolysierbares siliziumgebundenes Chlor eingesetzt wird. Der Vorreaktor ist nicht beheizt. Die so erhaltene Reaktionsmischung wird mit einer Temperatur der Zubereitung zwischen 0 und 20°C aus dem Vorreaktor ausgefahren auf den Kopf der Kolonne aufgegeben. Die Kolonne ist auf eine erhöhte Temperatur eingestellt. Weiterer Alkohol wird in die Kolonne unterhalb der Dosierstelle für die Reaktionsmischung aus dem Vorreaktor eingespeist und zwar mindestens in einer Menge, die ausreicht, um alle noch vorhandenen siliziumgebundenen Chloridreste vollständig zu hydrolysieren. Wasser wird für eine Kondensation in die Kolonne eingespeist, nicht in den Vorreaktor.
Das Chlorsilan besitzt Umgebungstemperatur bevor es in den Reaktor eingespeist wird. Das Verfahren ist auch praktikabel für Mischungen verschiedener Chlorsilane. Falls Wasser für eine Kondensation in die Kolonne eingespeist wird, werden die Chlorsilane in einem inerten Lösemittel gelöst, wobei der Siedepunkt des inerten Lösemittels über der Temperatur liegt, bei der die Kolonne betrieben wird.
Als Alkohole sind solche geeignet, deren Siedepunkt unterhalb dem Siedepunkt der eingesetzten Chlorsilane liegt.
Salzsäure wird sowohl aus dem Vorreaktor als auch der Reaktionskolonne zurückgewonnen. Die erhaltenen Produkte weißen Restsalzsäuregehalte im einstelligen ppm-Bereich auf.
Das Verfahren ist leistungsfähig und geeignet um Alkoxysilane lösemittelfrei herzustellen. Für die Herstellung von Organopolysiloxanen wird kein Beispiel gegeben. Nachteilig ist auch in diesem Fall, dass für die Herstellung von Polyorganosiloxanen die Verwendung zusätzlicher inerter Lösemittel wie Toluol erforderlich sind, die später aufwendig abgetrennt werden müssen. Auch werden bei der späteren Entflüchtigung der Zielprodukte Lösemittelgemische aus dem jeweiligen Alkohol und den zusätzlichen inerten Lösemittel erhalten, die aufgrund der Reaktionsführung nicht einfach wieder eingesetzt werden können, sondern zuerst aufwendig voneinander getrennt werden müssen, falls dies nicht durch die Bildung von azeotropen Gemischen und ähnlichen Effekten verhindert wird.

US5223636 lehrt ein Kolonnenverfahren zur Herstellung von Polyorganoalkoxysiloxanen, bei dem eine Kolonne verwendet wird, die auf einen Reaktor aufgesetzt ist. In den Reaktor wird zu Beginn ein Alkoxysilan eingespeist, das die vollalkoxylierte Version des Halogensilans ist, das während des Prozesses kontinuierlich auf die Kolonnen gegeben wird. In den Reaktor werden kontinuierlich Wasser und Alkohol eingespeist. Das Halogensilan wird im Gegenstrom der siedenden Komponenten aus dem Reaktor, vor allem dem Alkohol, alkoxyliert und zusammen mit dem Alkoxysilan hydrolysiert und kondensiert, wobei als Katalysatorsäure die Halogenwasserstoffsäure verwendet wird, die während der Halogensilanalkoxylierung und Hydrolyse frei wird. Diese Vorgehensweise hat zwar den Vorteil, dass keine Katalysatorsäure extra zugesetzt werden muss, aber den Nachteil, dass die Säuremenge nicht nur schlecht kontrollierbar sondern auch deutlich höher ist, als bei einer gezielten Zugabe. Da es bei solchen Anlagen im Produktionsmaßstab üblich ist, die Säure aus einem fest verrohrten Anschluss einzuspeisen, ist der Vorteil der Ersparnis an Katalysator eher gering einzuschätzen, da dagegen der große Nachteil der schlecht kontrollierbaren Reaktionsbedingungen steht. Zudem verbleiben größere Mengen Säure im Produkt, die nachträglich entfernt werden müssen. Bei einer solchen Vorgehensweise sind dem erreichbaren Kondensationsgrad Grenzen gesetzt. Für niedrige Kondensationsgrade ist eine solche Vorgehensweise akzeptabel. Allerdings steigt die Neigung zur Vergelung mit zunehmendem Kondensationsgrad stark an, so dass bei höheren Kondensationsgraden nur noch eine unzureichende Robustheit des Prozesses gegeben ist.
Um die Menge an Halogenwasserstoffsäure möglichst zu kontrollieren, wird in US5223636 vorgeschlagen einen Hilfsgasstrom zu verwenden, um das Halogenwasserstoffgas aus dem Reaktionssystem auszutreiben. Dieser wesentlich kompliziertere Prozess macht somit den vermeintlichen Vorteil vollends zunichte.
Wie die Beispiele von US5223636 zeigen sind die im Produkt verbleibenden HCl-Mengen deutlich größer als 100 ppm, was selbst zur Zeit der Patentlegung bereits ein überholter Stand der Technik war.

US6767982 lehrt ein kontinuierliches zweistufiges Verfahren zur Herstellung von linearen Polyorganoalkoxysiloxanen, dadurch gekennzeichnet, dass jedes Siliziumatom mindestens einen Alkoxysubstituenten trägt, dadurch gekennzeichnet, dass in einem ersten Schritt in einem ersten Reaktor aus einer Mischung von Halogensilanen, Alkohol und Wasser ein Teilalkoxylat hergestellt wird, das in einem zweiten Schritt auf eine Reaktionsdestillationskolonne gegeben wird, auf der die weitere Kondensation zum Endprodukt unter Zuspeisung von weiterem Alkohol stattfindet. Ggf. wird die Reaktionsmischung beim Transfer vom Vorreaktor auf die Kolonne durch eine Heizeinheit geschickt und temperiert. Bei dem Prozess fällt Halogenwasserstoffsäure gasförmig an, die aus dem System entfernt wird. Die in der flüssigen Phase gelöste Halogenwasserstoffsäure verbleibt im System. Hier wird ähnlich wie bereits in US5223636, während der Synthese erzeugte Halogenwasserstoffsäure als Katalysator verwendet.
D.h. die flüssige Phase ist mit Halogenwasserstoffsäure übersättigt. Da im ersten Schritt dieses Verfahrens bereits Wasser vorhanden ist, wird Halogenwasserstoffsäure bis zur Sättigung der wässrig alkoholischen Phase gelöst, so dass eine gesättigt halogensaure wässrige Umgebung für die Hydrolyse und Kondensation vorliegt. In Beispiel 1 in EP1772475 B1, wo ein teilweise vergleichbares kontinuierliches Verfahren zur Herstellung von Polyorganosiloxanen beschrieben wird, wird ausgeführt, dass eine solche gesättigte Ethanol-Wasserlösung sehr reaktiv ist und zur Reduzierung ihrer Reaktivität einer erheblichen Verdünnung im Falle von EP1772475 B1 mit Wasser, bedarf, um ihre reaktionstreibende Wirkung zu minimieren. In EP1772475 B1 wird ein wasserunlösliches, inertes, organisches Lösemittel für das Polyorganosiloxan eingesetzt, um es vor übermäßiger Kondensation zu schütze und aus der Wasser-Ethanol-Phase zu extrahieren. Auf diese Weise sind gemäß EP1772475 B1 hohe Kondensationsgrade möglich. Im Falle von US6767982 wird zwar eine ebensolche konzentrierte Ethanol-Wassermischung zugesetzt, gleichzeitig aber auf den Einsatz von Lösemitteln verzichtet. Eine solche Vorgehensweise ist auf geringe Kondensationsgrade limitiert, da mit zunehmender Kondensation das Vergelungsrisiko in inakzeptabler Weise ansteigt und der Prozess nicht mehr robust zu fahren ist. Daher ist es konsequent wenn US6767982 lediglich auf lineare Polyorganosiloxane abzielt, die einen Alkoxygehalt von mehr als 25 mol% besitzen müssen.
Zudem hat die Verwendung von Wasser in einer Prozessstufe, in der noch größere Mengen Halogenwassserstoffsäure entstehen zur Folge, dass ein größerer Anteil an Halogenwasserstoffsäure in die Aufarbeitung der Flüssigphasen verschleppt wird und dadurch verloren geht bzw. im Abfallstrom zu entsorgen ist.

DE102005003899 A1 lehrt ein Verfahren zur kontinuierlichen Herstellung von alkoxyarmen Siliconharzen. Ziel dieses Verfahrens ist die Herstellung hochkondensierter Organopolysiloxane, beispielsweise fester Siliconharze. Das Verfahren ist dadurch gekennzeichnet, dass Halogensilan in Gegenwart von Wasser und Alkohol in einer Kolonne umgesetzt wird, wobei das gewünschte Organopolysiloxan ebenfalls bereits im Reaktionssystem vorhanden ist. Wasser und Alkohol werden der Reaktionseinheit so zugegeben, dass stets mehr Wasser vorhanden ist, als zur vollständigen Hydrolyse aller siliziumgebundenen Halogengruppen erforderlich ist. Der Wasserüberschuss erlaubt die Steuerung der Kondensationsreaktion. Es wird in einem System aus zwei unterschiedlichen Destillationskolonnen ausgeführt, von denen die erste als reine Reaktionskolonne ausgelegt ist, die zweite als Reaktions- und Entflüchtigungseinheit. Auch dieses Verfahren benötigt den Zusatz inerter organischer Lösemittel wie beispielsweise aromatische Lösemittel, da sich hochkondensierte Organopolysiloxane bilden die eine hohe Viskosität zeigen. Diese sind nur noch in Lösung handhabbar.

DE102005003898 A1 lehrt ein kontinuierliches Verfahren zur Herstellung von alkoxyfunktionellen Polysiloxanen aus Chlorsilanen, wobei als Reaktionseinheit hier ein Doppelkolonnensystem mit einem Vorreaktor verwendet wird. Der große Vorteil dieser Anordnung besteht darin, dass durch die Herstellung eines Teilalkoxylates im Vorreaktor nur noch eine verhältnismäßig geringe Menge Salzsäuregas im Kolonnensystem entsteht. Das geringere Volumen des Salzsäuregases wirkt somit nicht mehr in dem hohen Maße kapazitätslimitierend in den Kolonnen und es erhöht sich daher deutlich die Raum-Zeit-Leistung des Kolonnensystems.
Die zweite Kolonne wird als Stripkolonne gefahren und leistet zur Kondensation keinen Beitrag. In der zweiten Kolonne wird ggf. ein inertes organisches Lösemittel eingesetzt. Es ist dabei nicht explizit ausgeführt, in welchen Fällen die Notwendigkeit besteht ein solches inertes organisches Lösemittel einzusetzen. Es ist jedoch offensichtlich, dass die lösemittelfreie Fahrweise diesem Verfahren folgend zumindest problematisch und damit nicht durchgängig möglich ist, obwohl als Zielprodukte keine hochkondensierten sondern lediglich niedrig kondensierte alkoxyreiche Siloxane erhalten werden. Das Verfahren ist nur geeignet um niedrig kondensierte, hoch alkoxyfunktionelle Oligomere zu erzeugen, jedoch nicht um höhere Kondensationsgrade einzustellen.

Das Dokument EP 1 205 505 offenbart ein Verfahren, das dem vorliegenden Verfahren ähnlich ist. Dieses Verfahren ist im Beispiel 1 in Absätze 37-40 beschrieben.

### Aufgabe der Erfindung:

Aufgabe der Erfindung ist die Bereitstellung eines teil- oder voll-kontinuierlichen, wirtschaftlichen Verfahren zur Herstellung von Polyorganoalkoxysiloxanen aus Chlorsilanen oder Gemischen von Chlorsilanen das
- es gestattet aus Mischungen verschiedener Chlorsilane - Polyorganosiloxane konstanter Zusammensetzung reproduzierbar herzustellen,
- gänzlich ohne die Verwendung inerter organischer Lösemittel auskommt, d.h. das in der Reaktionsmasse lediglich die als Reaktanden benötigten organischen Komponenten enthält,
- keine Abwasserphase erzeugt,
- Produkte mit sehr niedrigen Restsäuregehalten < 10 ppm zugänglich macht
- es gestattet die Alkoxygehalte gezielt von hoch bis niederig einzustellen, so dass es geeignet ist sowohl niedermolekulare als auch hochmolekulare Polyorganosiloxane bis hin zu Feststoffen bereitzustellen, und damit höchste Kondensationsgrade in einer robusten Verfahrensweise zulässt
- eine Rückgewinnungsrate für die freiwerdende Halogenwasserstoffsäure von mindestens 95% besitzt.

Überraschenderweise zeigt sich, dass diese Aufgabe in allen Teilaspekten durch die vorliegende Erfindung gelöst wird.

### Gegenstand der Erfindung:

Ein Gegenstand der Erfindung ist ein voll-kontinuierliches Verfahren zur Herstellung von verzweigten Organopolysiloxanen, wobei
- in einem ersten Schritt in einer Kolonne als erste Reaktionseinheit kontinuierlich mindestens ein Chlorsilan mit Alkohol zu einem niedrigkondensierten Polyorganosiloxangemisch (=Siliconharzintermediat) umgesetzt wird, wobei die Umsetzung
   a) mit Alkohol und Wasser, oder
   b) mit Alkohol, Wasser und mindestens einem weiteren Chlorsilan, das sich vom ersten Chlorsilan wie folgt unterscheidet:
      - es ist schwerer flüchtig, hat also einen höheren Siedepunkt und
      - kann zudem eine geringere Reaktivität aufweisen, erfolgt und
   c) 0,1 bis 2,0 Mol Alkohol je Mol hydrolysierbares Chlor eingesetzt wird, und
   d) der Alkohol höchstens 5 Gew.% Wasser enthält, und
- in einem zweiten Schritt das Siliconharzintermediat aus dem ersten Schritt in einen kontinuierlichen Loop Reaktor, oder einen gerührtem Batch Reaktor mit kontinuierlichem Zulauf und Ablauf oder einer kontinuierlich geschalteten Rührwerkskaskade als zweite Reaktionseinheit überführt wird, und dort eine Umsetzung
   a) mit Alkohol und Wasser und in Gegenwart katalytischer Spuren Chlorwasserstoffs, oder
   b) mit Alkohol und Wasser und in Gegenwart katalytischer Spuren Chlorwasserstoffs und unter Zugabe weiterer alkoxy- und/oder hydroxyfunktionellen Organopolysiloxane oder alkoxy- und/oder hydroxyfunktionellen Silane,
   zum Endprodukt, einem verzweigten Organopolysiloxan mit gewünschtem Kondensationsgrad, erfolgt,
   mit der Maßgabe, dass während des gesamten Verfahrens außer dem verwendeten Alkohol kein anderes Lösemittel eingesetzt wird, wobei dieser Alkohol aus nur einer Art Alkohol bestehen kann oder aus einem Gemisch aus mindestens zwei verschiedenen Alkoholen.

Ein weiterer Gegenstand der Erfindung ist ein teil-kontinuierliches Verfahren zur Herstellung von verzweigten Organopolysiloxanen, wobei
- in einem ersten Schritt in einer Kolonne als erste Reaktionseinheit kontinuierlich mindestens ein Chlorsilan zu einem niedrigkondensierten Polyorganosiloxangemisch (=Siliconharzintermediat) umgesetzt wird, wobei die Umsetzung
   a) mit Alkohol und Wasser, oder
   b) mit Alkohol, Wasser und mindestens einem weiteren Chlorsilan, das sich vom ersten Chlorsilan wie folgt unterscheidet:
      Schritt wie folgt unterscheidet:
      - es ist schwerer flüchtig, hat also einen höheren Siedepunkt und
      - kann zudem eine geringere Reaktivität aufweisen, erfolgt, und
   c) 0,1 bis 2,0 Mol Alkohol je Mol hydrolysierbares Chlor eingesetzt wird, und
   d) der Alkohol höchstens 5 Gew.% Wasser enthält, und
- in einem zweiten Schritt das Siliconharzintermediat aus dem ersten Schritt in einen gerührten diskontinuierlich betriebenen Batch Reaktor als zweite Reaktionseinheit überführt wird, und dort eine Umsetzung
   a) mit Alkohol und Wasser und in Gegenwart katalytischer Spuren Chlorwasserstoffs, oder
   b) mit Alkohol und Wasser und in Gegenwart katalytischer Spuren Chlorwasserstoffs und unter Zugabe weiterer alkoxy- und/oder hydroxyfunktionellen Organopolysiloxane oder alkoxy- und/oder hydroxyfunktionellen Silane,
   zum Endprodukt, einem verzweigten Organopolysiloxan mit gewünschtem Kondensationsgrad, erfolgt,
   mit der Maßgabe, dass während des gesamten Verfahrens außer dem verwendeten Alkohol kein anderes Lösemittel eingesetzt wird, wobei dieser Alkohol aus nur einer Art Alkohol bestehen kann oder aus einem Gemisch aus mindestens zwei verschiedenen Alkoholen.

Eine weitere Ausführungsform sowohl des voll- als auch teilkontinuierlichen erfindungsgemäßen Verfahrens ist dadurch gekennzeichnet, dass
das im ersten Schritt anfallende salzsäurehaltige Kopfdestillat der Kolonne kondensiert und kurz unterhalb der Einspeisestelle des Reaktionsgemisches aus dem Vorreaktor auf die Kolonne zurückgegeben wird, so dass es nicht in den Sumpf der Kolonne gelangt und somit die in der Kolonne frei werdende Salzsäure vollständig aus dem Reaktionssystem abgeführt wird, und dadurch das Siliconharzintermediat im Sumpf der Reaktionskolonne ohne weitere Aufarbeitung mit weniger 100 ppm Rest-Salzsäure-Gehalt anfällt.

Im Anschluss kann eine Aufarbeitung/Reinigung des Endproduktes (=hoch kondensierte, verzweigte Organopolysiloxane) durch Entflüchtigung erfolgen. Dabei wird es von flüchtigen Bestandteilen befreit und liegt danach in seiner reinen und somit finalen Form vor. Die Entflüchtigung kann beliebig variiert werden, wobei die Vorgehensweisen allesamt im Rahmen des bekannten Standes der Technik liegen und beispielsweise Destillation umfassen. Weitere Beispiele für geeignete Variationen werden weiter Unten näher ausgeführt. Das Destillat, das bei der Entflüchtigung des Produktes nach dem zweiten Schritt erhalten wird, wird im folgenden Text als Destillat der zweiten Reaktionseinheit bezeichnet.
Als Alkohole werden vorzugsweise solche Kohlenwasserstoffverbindungen mit einer alkoholischen Hydroxylgruppe eingesetzt, die zur Herstellung von Alkoxysilanen bzw. zur Herstellung von Organopolysiloxanen durch Umsetzung von Chlorsilan mit Alkoholen und ggf. Wasser verwendet werden können und deren Siedepunkte unter dem des jeweils herzustellenden Alkoxysilans bzw. Organopolysiloxans liegt. Bevorzugt sind Alkanole und durch Ethersauerstoff substituierte Alkanole mit jeweils 1 bis 6 Kohlenstoffatomen, wie Methanol, Ethanol, n- oder iso-Propanol, beta Methoxyethanol, n-Butanol oder n-Hexanol. Besonders bevorzugt sind Methanol, Ethanol, iso-Propanol und Butanol, insbesondere Methanol und Ethanol. Es können auch Gemische verschiedener Alkohole eingesetzt werden, die ggf. in einer kurzen Mischstrecke vor der Einspeisung in die jeweilige Reaktionseinheit homogenisiert werden können.

Der im Verfahren entstehende Chlorwasserstoff wird vorzugsweise am Kopf der ersten Reaktionseinheit von den kondensierbaren Anteilen befreit, die ihrerseits wieder in die entsprechende Reaktionseinheit zurückgeführt werden. Der Chlorwasserstoff steht damit als Gas für seine Rückgewinnung zur Verfügung.

Als Chlorsilan oder Chlorsilangemische werden vorzugsweise solche eingesetzt, die bereits im Stand der Technik zur Herstellung von Alkoxysilanen bzw. Organopolysiloxanen durch Umsetzung von Chlorsilan mit Alkohol und ggf. Wasser eingesetzt werden. Es sind dies insbesondere die Silane der allgemeinen Formel (I)

RₙSiCl₄₋ₙ (I),

wobei
R einen Wasserstoffrest oder einen mit Heteroatomen substituierten oder nicht-substituierten säurestabilen C1 - C18 Kohlenwasserstoffrest bedeutet und
n die Werte 0, 1, 2 oder 3 haben kann,
mit der Maßgabe, dass
n in höchstens 50% der Silane der Formel (I) den Wert 3 besitzt und
n in mindestens 20% der Silane der Formel (I) den Wert 0 oder 1 besitzt.

Da hier Chlorsilane eingesetzt werden, bedeutet Säurestabilität des Restes R gegen den Angriff durch Salzsäure.

In allen Formeln der vorliegenden Erfindungsmeldung weisen die Symbole ihre Bedeutungen unabhängig voneinander auf. Das Siliziumatom ist stets vierwertig.

Ausgewählte Beispiele für Kohlenwasserstoffreste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neoPentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie Tolylreste, Xylylreste und Ethylphenylreste, und Aralkylreste, wie der Benzylrest und der β-Phenylethylrest. Besonders bevorzugte Kohlenwasserstoffreste R sind der Methyl, der n-Propyl und der Phenylrest.

### Erster Schritt

Die Silane der Formel (I) können sowohl als reine Silane als auch als Gemisch verschiedener Silane der Formel (I) eingesetzt werden Sie werden direkt in die erste Reaktionseinheit, also in die Kolonne eingespeist.
- In der ersten Reaktionseinheit erfolgt sowohl eine Alkoxylierung der Chlorsilane als auch eine Kondensation durch die Umsetzung des Chlorsilans oder des Chlorsilangemisches mit Alkohol und Wasser zu niedrigkondensierten Organopolysiloxanen (im weiteren Text als Siliconharzintermediate bezeichnet) und Chlorwasserstoffgas. Das anfallende Chlorwasserstoffgas wird aus der Kolonne abgeführt und nach entfernen kondensationsfähiger Bestandteile recycelt. Die mit Kühlsole kondensationsfähigen Bestandteile können in die Kolonne zurück überführt werden. In der Kolonne trifft das Chlorsilan bzw. das Chlorsilangemisch dabei zunächst auf Alkohol, der ihm als Dampf aus dem Kolonnensumpf, in dem er auf Siedetemperatur erhitzt wird, entgegenströmt. Dabei bilden sich aus den Chlorsilanen Alkoxysilane, die in den Sumpf der Kolonnen wandern. Dort treffen sie auf ein Gemisch aus Alkohol und Wasser, so dass sie hydrolysieren und kondensieren, wobei Oligomere entstehen. Der Kondensationsgrad ist über die Wassermenge steuerbar. Die geringen Mengen Restchlorgehalt, die das Alkoxysilan bzw. das Alkoxysilangemisch mit sich führt, ist dabei als Hydrolysekatalysator ausreichend. Die während der Alkoxysilanbildung in der Kolonne freigesetzte Salzsäure wird aus der Kolonne abgeführt. Es ist für das Verfahren kennzeichnend, dass hierbei Maßnahmen getroffen werden, die eine Einbringung der bei der Alkoxysilanbildung freigesetzten Salzsäure über die dem Alkoxysilan zwangsläufig und unvermeidlich anhaftende Salzsäure hinaus verhindern. Eine Übersäuerung des Sumpfes durch Einleiten von Säurerückläufen wie teilweise im Stand der Technik für vergleichbare Verfahren als Vorteil angegeben, ist für das erfindungsgemäße Verfahren also explizit zu vermeiden.

Die Viskosität der isolierten, entflüchtigten, Siliconharzintermediate nach der ersten Reaktionseinheit ist höchstens 600 mPas, besonders höchstens 500 mPas, insbesondere Höchstens 400 mPas jeweils bei 25°C.

Der Alkoxygehalt der reinen entflüchtigten, Siliconharzintermediate nach dieser ersten Reaktionseinheit beträgt mindestens 20 Gew.-%, bevorzugt mindestens 22 Gew.-%, insbesondere mindestens 25 Gew.-%.Die Menge an siliziumgebundenem Chlor in diesem Siliconharzintermediat der ersten Reaktionseinheit beträgt höchstens 100 ppm, bevorzugt höchstens 75 ppm, insbesondere höchstens 50 ppm, besonders bevorzugt höchstens 30 ppm.

### Zweiter Schritt

Das Reaktionsgemisch enthaltend das Siliconharzintermediat aus dem ersten Schritt wird in eine zweite Reaktionseinheit umfassend einen Loop Reaktor oder gerührten Batch Reaktor, mit kontinuierlichem Zulauf und Ablauf überführt. Weiterhin ist die Verwendung kontinuierlich geschalteter Rührwerkskaskaden aus mindestens zwei Rührwerken denkbar. Der zweite Schritt kann auch diskontinuierlich ausgeführt werden, in dem ein einfaches Rührwerk verwendet wird, indem die Reaktion mit einer geeigneten Haltezeit ausgeführt wird und danach zur Aufarbeitung ausgefahren wird.

In dieser zweiten Reaktionseinheit erfolgt die weitere Umsetzung a) mit Alkohol und Wasser und in Gegenwart katalytischer Spuren Chlorwasserstoffs, welche aus Schritt 1 und 2 eingetragen wurden, zur gewünschten Kondensationsstufe (=hoch kondensierte, verzweigte Organopolysiloxane = Endprodukt). Bevorzugt enthält die Mischung in der zweiten Reaktionseinheit Wasser in Mengen von 4 bis 17 Gewichtsteilen, besonders bevorzugt von 6 bis 14 Gewichtsteilen, Alkohol in Mengen von 50 bis 120 Gewichtsteilen, besonders bevorzugt von 60 bis 100 Gewichtsteilen und Chlorwasserstoff in Mengen von 0,02 bis 0,1 Gewichtsteilen, besonders bevorzugt von 0,04 bis 0,08 Gewichtsteilen, jeweils bezogen auf 100 Gewichtsteile reine entflüchtigte, Siliconharzintermediate aus dem ersten Schritt.

In einer weiteren Ausführungsform b) erfolgt die Umsetzung mit Alkohol und Wasser und in Gegenwart katalytischer Spuren Chlorwasserstoffs unter Zugabe weiterer alkoxy- und/oder hydroxyfunktionelle Organopolysiloxane oder alkoxy- und/oder hydroxyfunktionelle Silane. Dabei sind die weiteren alkoxy- und/oder hydroxyfunktionellen Organopolysiloxane oder alkoxy- und/oder hydroxyfunktionellen Silane vorzugsweise flüssig oder sie sind in dem Alkohol oder dem Alkoholgemisch, das zur Herstellung des Siliconharzintermediates im ersten Schritt diente löslich.

Bei den zusätzlichen alkoxy- und/oder hydroxyfunktionellen Organopolysiloxanen handelt es sich um solche aus Wiederholungseinheiten der Formel (IV):

Formel (IV): RₚSi(OR¹)_{q}O_{(4-p-q)/2}

wobei)
R die oben angegebene Bedeutung hat,
R¹ gleiche oder verschiedene einwertige C₁-C₆-Alkylreste oder Wasserstoff bedeutet,
p und q 0, 1, 2 oder 3 bedeuten,
mit der Maßgabe, dass
p + q ≤ 3 und
p in mindestens 20%, vorzugsweise in mindestens 30% und besonders bevorzugt in mindestens 40% aller Wiederholungseinheiten der Formel (IV) den Wert 1 besitzt.

Die weiteren zusätzlichen Alkoxysilane weisen die allgemeine Formel (V) auf:

Formel (V): R²ₒSi(OR¹)₄₋ₒ

wobei
R² ein mit Heteroatomen substituierter oder nicht substituierter Kohlenwasserstoffrest bedeutet, wobei keine Stickstoffatome als Heteroatome enthalten sind,
R¹ die oben angegebene Bedeutung hat und
o 0, 1, 2 oder 3 bedeutet.

Ein großer Vorteil des erfindungsgemäßen Verfahren ist, dass die weitere Hydrolyse und Kondensation im zweiten Schritt ohne Zusatz weiterer polarer oder unpolarer Lösemittel und nur unter Verwendung des als Reaktand eingesetzten Alkohols oder Alkoholgemisches zum Endprodukt den beliebig hoch kondensierten, verzweigten Organopolysiloxanen erfolgt.

### Ausführungsbeschreibung:

Im Folgenden wird die Durchführung des erfindungsgemäßen Verfahrens beispielhaft an einer Apparatur beschrieben. Die Anlage umfasst eine Kolonne mit Umlaufverdampfer (erster Schritt) und einen Loop (zweiter-Schritt).
Erster Schritt: Die erste Reaktionseinheit besteht aus einem Umlaufverdampfer und einer darauf aufgesetzten Kolonne. Die Kolonne der ersten Reaktionseinheit besitzt oben zunächst einen wasserbetriebenen Kühler und anschließend einen solebetriebenen Kühler. Die dort erhaltenen Destillate werden in die Kolonne zurückgespeist. Das nach dem Kühler erhaltene Chlorwasserstoffgas kann zurückgewonnen werden.
Zweiter Schritt: Die zweite Reaktionseinheit besteht aus einem Loop oder aus einem gerührtem Batch Reaktor mit kontinuierlichem Zulauf und Ablauf, einer kontinuierlich geschalteten Rührwerkskaskade oder einem diskontinuierlichen Rührwerk, wobei der Loop bevorzugt ist. Eine weitere Variante ist die diskontinuierliche Nachkondensation im Batch Reaktor.

Aus dem Umlaufverdampfer der ersten Reaktionseinheit wird kontinuierlich mittels einer Kreiselpumpe so viel Reaktionsproduktgemisch ausgetragen, wie durch die Reaktion erhalten wird und mit weiterem Wasser, gegebenenfalls Ethanol und katalytischen Mengen Salzsäure oder Chlorsilan vermischt und im Loop der zweiten Reaktionseinheit umgesetzt. Aus diesem Loop der zweiten Reaktionseinheit wird in dem Maße Endprodukt entfernt, in dem es gebildet wird.

Die Siliconharzintermediate, die aus dem ersten Schritt erhalten werden, können durch übliche Maßnahmen der Aufarbeitung, umfassend die Schritte Filtration, Destillation und Abmischen als reine, stabile Produkte erhalten werden, oder mit anderen Komponenten zu Zubereitungen formuliert werden. Solche Komponenten für Zubereitungen umfassen dabei außer anderen siliziumhaltigen Komponenten auch organische Monomere oder organische Polymere, Wasser, Lösemittel, Hilfsstoffe wie Emulgatoren, Stabilisatoren, pH-Einstellmittel oder weitere Additive, Füllstoffe, Pigmente, Baustoffe, wobei diese Aufzählung nur beispielhaft und nicht als beschränkend zu verstehen ist.

Bei den Siliconharzintermediaten handelt es sich um solche, die aus Wiederholungseinheiten der Formel (II) aufgebaut sind:

Formel (II): R³ₓSi(OR¹)_{y}O_{(4-x-y)/2}

wobei R³ einen Rest R oder R² bedeutet, jeweils mit den oben angegebenen Bedeutungen,
R¹ die oben angegebene Bedeutung hat,
x und y die Werte 0, 1, 2 oder 3 bedeuten, mit der Maßgabe, dass
x + y ≤ 3 und
x in mindestens 20%, vorzugsweise in mindestens 30% und besonders bevorzugt in mindestens 40% aller Wiederholungseinheiten der Formel (II) den Wert 1 besitzt, und den Wert 1 auch in 100% aller Wiederholungseinheiten der Formel (II) haben kann, und x über alle Wiederholungseinheiten der Formel(II) gemittelt durchschnittlich einen Wert von 0,8 bis 1,9, bevorzugt von 0,85 bis 1,9 und besonders bevorzugt einen Wert von 0,9 bis 1,8 besitzt, wobei x = 1 und x = 2 besonders bevorzugt ist,
y über alle Wiederholungseinheiten der allgemeinen Formel (II) gemittelt einen durchschnittlichen Wert von 0,6 bis 2,0, vorzugsweise von 0,7 bis 1,9 und besonders bevorzugt von 0,8 bis 1,9 besitzt, wobei
die Siliconharzintermediate insbesondere dadurch gekennzeichnet sind, dass sie mindestens 20 Gewichtsprozent Reste OR¹ enthalten, bevorzugt mindestens 21 Gewichtsprozent, besonders bevorzugt mindestens 22 Gewichtsprozent, insbesondere mindestens 23 Gewichtsprozent,
wobei in den Siliconharzintermediate die Einheit OR² zu höchstens 10 Gew.%, bevorzugt höchstens 9 Gew.%, besonders bevorzugt höchstens 8 Gew.% insbesondere höchstens 7 Gew.% Hydroxygruppen enthalten sind. Silanolgruppen müssen in den Siliconharzintermediaten aus Wiederholungseinheiten der Formel (II) nicht zwingend vorhanden sein.

Die Siliconharzintermediate besitzen Molekulargewichte im Bereich von 600 bis 8.000 g/mol (Gewichtsmittel M_{w}) mit einer Polydispersität (=PD) von höchstens 12. Bevorzugt besitzen sie ein M_{w} von 650 - 5.000 g/mol mit einer Polydispersität von höchstens 10, besonders bevorzugt besitzen sie ein M_{w} von 700 - 4000 g/mol mit einer Polydispersität von höchstens 8, insbesondere besitzen sie ein M_{w} von 700 - 3000 g/mol mit einer Polydispersität von höchstens 6. Sie sind als reine Produkte flüssig, wobei ihre Viskositäten im Bereich von 10 bis 2000 mPas , bevorzugt von 25 - 1500 mPas und besonders bevorzugt von 30 bis 1000 mPas bei 25°C und Normdruck liegen.

Die Endprodukte, die aus dem-zweiten Schritt erhalten werden, können durch übliche Maßnahmen der Aufarbeitung, umfassend die Schritte Filtration, Destillation und Abmischen als reine, stabile Endprodukte erhalten werden, oder mit anderen Komponenten zu Zubereitungen formuliert werden. Die Endprodukte aus diesem zweiten Schritt sind als isolierte reine Endprodukte flüssig, hochviskos oder fest, je nachdem bis zu welchem Kondensationsgrad sie aufkondensiert werden. Der erhaltene Kondensationsgrad ist abhängig von den Reaktionsbedingungen, die in der zweiten Reaktionseinheit gewählt werden. Insbesondere wird der Kondensationsgrad durch die Menge an Wasser, Säure und die Temperatur, sowie die Art der gewählten Säure und die Dosierreihenfolge und die Dosiergeschwindigkeit bestimmt, die in der zweiten Reaktionseinheit gewählt wird. Grundsätzlich sind dabei beliebige Kombinationen dieser Parameter denkbar, wobei ihre Wahl das zu erzielende Ergebnis beeinflusst. Da hier das Verfahren in seiner gesamten Variabilität erfindungsgegenständlich ist, sind hier grundsätzlich keine Kombinationsmöglichkeiten ausgeschlossen, außer solchen, die offensichtlich widersinnig sind, weil für sie aus bereits bekanntem Stand der Technik offensichtlich ist, dass sie nicht zur Herstellung löslicher oder schmelzbarer und damit weiterverarbeitbarer Organopolysiloxane führen. Überraschend ist am vorliegenden Verfahren die im Gegensatz zum Stand der Technik stehende Tatsache, dass die Variabilität des Verfahrens und die daraus resultierende Produktvielfalt ohne die Verwendung polarer oder unpolarer organischer Lösemittel realisierbar ist, abgesehen von dem eingesetzten Alkohol oder Alkoholgemisch.
Flüssige bis dickflüssige Endprodukte werden bevorzugt dann erhalten, wenn die Umsetzung im zweiten Schritt mit Wasser in Mengen von 4 bis 10 Gewichtsteilen erfolgt, bezogen auf 100 Gewichtsteile des reinen entflüchtigten Siliconharzintermediates aus dem ersten Schritt.
Zähflüssige bis feste Produkte werden im zweiten Schritt bevorzugt erhalten, wenn die Mischung Wasser in Mengen von 10 bis 17 Gewichtsteilen enthält, bezogen auf 100 Gewichtsteile reinem entflüchtigtem Siliconharzintermediat aus dem ersten Schritt.

Bevorzugt handelt es sich beim verwendeten Wasser um teilentsalztes Wasser, vollentsalztes Wasser, destilliertes oder (mehrfach) redestilliertes Wasser und Wässer für medizinische oder pharmazeutische Zwecke, besonders bevorzugt um teilentsalztes Wasser und vollentsalztes Wasser.

Bevorzugt hat das erfindungsgemäß eingesetzte Wasser eine Leitfähigkeit bei 25°C und 1010 hPa von höchstens 50 µS/cm. Bevorzugt ist das erfindungsgemäß eingesetzte Wasser luftgesättigt, klar und farblos.

Bevorzugt wird in allen Schritten derselbe Alkohol eingesetzt, bevorzugt ist es Methanol oder Ethanol. Der Ethanol kann übliche Vergällungmittel, wie Methylethylketon, Petrolether oder Cyclohexan, enthalten, wobei Methylethylketon bevorzugt ist.

Im zweiten-Schritt kann Chlorwasserstoff als Salzsäure oder in Form einer Vorstufe, wie Chlorsilan, Säurechlorid oder linearem Phosphornitrilchlorid zugegeben werden, wobei die Salzsäurelösung und hier insbesondere wässrige Salzsäurelösung bevorzugt ist.

Im zweiten Schritt werden die Komponenten bevorzugt einzeln dosiert, kurz vermischt und so in den Loop zudosiert. Beim geschlossenen Loop können die Komponenten auch einzeln vor der Umwälzpumpe zudosiert werden.
Bevorzugt wird der geschlossene Loop bei einem Absolutdruck von 1 bis 5 bar, Temperaturen von 5 bis 10 °C unterhalb der Siedetemperatur, einer mittleren Verweildauer von 60 bis 150 min und mit laminarer bis turbulenter Strömung betrieben.
Im zweiten Schritt wird der gerührte Batch Reaktor mit kontinuierlichem Zulauf und Ablauf bevorzugt bei einem Absolutdruck von 1 bar, der Siedetemperatur der Mischung und bei einer mittleren Verweildauer von 60 bis 150 min betrieben. Die mittlere Verweildauer errechnet sich aus dem Reaktionsvolumen geteilt durch die Abzugsgeschwindigkeit des Reaktionsproduktes.

Komponenten, die zusammen mit dem Endprodukt aus Schritt zwei in Zubereitungen eingesetzt werden können, sind dabei andere flüssige oder feste siliziumhaltige Komponenten auch organische Monomere oder organische Polymere, Wasser, Lösemittel, Hilfsstoffe wie Emulgatoren, Stabilisatoren, pH-Einstellmittel oder weitere Additive, wobei diese Aufzählung nur beispielhaft ist und nicht als beschränkend zu verstehen ist.

Bei den Endprodukten aus dem zweiten Schritt handelt es sich um solche, die aus Wiederholungseinheiten der Formel (III) aufgebaut sind:

Formel (III): R³ₐSi(OR¹)_{b}O_{(4-a-b)/2}

wobei,
R³ und R¹ die bereits oben angegebenen Bedeutungen haben,
a und b 0, 1, 2 oder 3 bedeuten, mit der Maßgabe, dass
a + b ≤ 3 und
a in mindestens 20%, vorzugsweise in mindestens 30% und besonders bevorzugt in mindestens 40% aller Wiederholungseinheiten der Formel (III) den Wert 1 besitzt und den Wert 1 auch in 100% aller Wiederholungseinheiten der Formel (III) haben kann, und a über alle Wiederholungseinheiten der Formel (III) gemittelt durchschnittlich einen Wert von 0,8 bis 1,9, bevorzugt von 0,85 bis 1,9 und besonders bevorzugt einen Wert von 0,9 bis 1,8 besitzt und wobei a = 1 und a = 2 besonders bevorzugt Werte für a sind,
b über alle Wiederholungseinheiten der allgemeinen Formel (III) gemittelt einen durchschnittlichen Wert von 0,05 bis 1,7, vorzugsweise von 0,06 bis 1,6 und besonders bevorzugt von 0,08 bis 1,5 besitzt, wobei
die Endprodukte aus Wiederholungseinheiten der Formel (III) insbesondere dadurch gekennzeichnet sind, dass sie höchstens 25 Gew.% Reste OR¹ enthalten, bevorzugt höchstens 24 Gew.%, besonders bevorzugt höchstens 23 Ge.%, insbesondere höchstens 22 Gew.%,
wobei in den Endprodukten aus Wiederholungseinheiten der Formel (III) die Einheit OR¹ zu höchstens 10 Gew.%, bevorzugt höchstens 9 Gew.%, besonders bevorzugt höchstens 8 Gew.% insbesondere höchstens 7 Gew.% Hydroxygruppen enthalten ist. Silanolgruppen müssen in den Endprodukten nicht zwingend vorhanden sein. Dabei sind in den Endprodukten stets mindestens 5 Gew.% weniger Reste OR¹ enthalten als im entsprechenden Siliconharzintermediat, bevorzugt mindestens 7 Gew.%, besonders bevorzugt mindestens 10 Gew.%, insbesondere mindestens 12 Gew.%, wobei 100 Gewichtsprozent der Reste OR¹ in diesem Fall die Gesamtzahl der Reste OR¹ aus den Siliconharzintermediaten aus Wiederholungseinheiten der Formel (II) sind.

Die Endprodukte aus Wiederholungseinheiten der Formel (III) besitzen mittlere Molekulargewichte Mw im Bereich von 1.000 bis 50.000 g/mol (Gewichtsmittel) mit einer Polydispersität (PD) 30.000 g/mol mit einer Polydispersität von 18, besonders bevorzugt besitzen sie ein Mw l von 1.500 - 20.000 g/mol mit einer Polydispersität von 15, insbesondere besitzen sie ein Mw von 1.500 - 15.000 g/mol mit einer Polydispersität von 13. Das Mw der Endprodukte aus Wiederholungseinheiten der Formel (III) beträgt dabei mindestens das 1,1-fache des Mw der Siliconharzintermediate aus Wiederhloungseinheiten der Formel (II), bevorzugt mindestens das 1,2-fache, besonders bevorzugt mindestens das 1,3-fache, insbesondere mindestens das 1,4-fache. Da die Endprodukte aus Wiederholungseinheiten der Formel (III) sowohl flüssig als auch hochviskos oder fest sein können, können sie einen sehr großen Viskositätsbereich überstreichen. Sofern es sich um flüssige Organopolysiloxane handelt, beträgt ihre Viskosität vorzugsweise > 600 mPas, besonders bevorzugt > 750 mPas und besonders bevorzugt > 1000 mPas bei 25°C und Normdruck.

Die nach dem erfindungsgemäßen Verfahren hergestellten Siliconharzintermediate oder die Endprodukte bzw. die daraus erhältlichen Zubereitungen eignen sich gut zum Einsatz in korrosionsschützenden Zubereitungen. Insbesondere sind sie geeignet zur Verwendung zum Zwecke des Korrosionsschutzes bei hoher Temperatur.
Außer zum Zwecke des hochtemperaturbeständigen Korrosionsschutzes können die nach dem erfindungsgemäßen Verfahren hergestellten Siliconharzintermediate oder Endprodukte bzw. die daraus erhältlichen Zubereitungen auch zum Korrosionsschutz von Armierungsstahl in Stahlbeton eingesetzt werden, wobei die erfindungsgemäßen Siliconharzintermediate oder die Endprodukte bzw. die daraus erhältlichen Zubereitungen hierbei sowohl in reiner Form als auch in Zubereitungen eingesetzt werden können. Korrosionssinhibierende Effekte im Stahlbeton werden dabei sowohl dann erreicht, wenn man die erfindungsgemäßen Siliconharzintermediate oder die Endprodukte bzw. deren Zubereitungen, die diese enthalten, in die Betonmischung einbringt, bevor sie in Form gebracht und ausgehärtet wird, als auch durch deren direktes Aufbringen auf die Oberfläche des Betons, nachdem der Beton ausgehärtet ist.

Die Siliconharzintermediate oder die Endprodukte bzw. deren Zubereitungen können zur Herstellung von Kunststeinen für den Innen- und Außenbereich als Bindemittel verwendet werden.

Außer zum Zwecke des Korrosionsschutzes auf Metallen können die nach dem erfindungsgemäßen Verfahren hergestellten Siliconharzintermediate oder die Endprodukte auch zur Manipulation von weiteren Eigenschaften von Zubereitungen oder von daraus erhältlichen Festkörpern oder Filmen eingesetzt werden:
- Steuerung des elektrischen Leitfähigkeit und des elektrischen Widerstandes
- Steuerung der Verlaufseigenschaften einer Zubereitung
- Steuerung des Glanzes eines feuchten oder gehärteten Filmes oder eines Objektes
- Erhöhung der Bewitterungsbeständigkeit
- Erhöhung der Chemikalienresistenz
- Erhöhung der Farbtonstabilität
- Reduzierung der Kreidungsneigung
- Reduzierung oder Erhöhung der Haft- und Gleitreibung auf Festkörpern oder Filmen
- Stabilisierung oder Destabilisierung von Schaum in der Zubereitung
- Verbesserung der Haftung der Zubereitung Steuerung des Füllstoff- und Pigmentnetz- und -dispergierverhaltens,
- Steuerung der rheologischen Eigenschaften der Zubereitung,
- Steuerung der mechanischen Eigenschaften, wie z.B. Flexibilität, Kratzfestigkeit, Elastizität, Dehnbarkeit, Biegefähigkeit, Reißverhalten, Rückprallverhalten, Härte, Dichte, Weiterreißfestigkeit, Druckverformungsrest, Verhalten bei verschiedenen Temperaturen, Ausdehnungskoeffizient, Abriebfestigkeit sowie weiterer Eigenschaften wie der Wärmeleitfähigkeit, Brennbarkeit, Gasdurchlässigkeit, Beständigkeit gegen Wasserdampf, Heißluft, Chemikalien, Bewitterung und Strahlung, der Sterilisierbarkeit, von Festkörpern oder Filmen Steuerung der elektrischen Eigenschaften, wie z.B. dielektrischer Verlustfaktor, Durchschlagfestigkeit, Dielektrizitätskonstante, Kriechstromfestigkeit, Lichtbogenbeständigkeit, Oberflächenwiderstand, spezifischer Durchschlagswiderstand,
- Flexibilität, Kratzfestigkeit, Elastizität, Dehnbarkeit, Biegefähigkeit, Reißverhalten, Rückprallverhalten, Härte, Dichte, Weiterreißfestigkeit, Druckverformungsrest, Verhalten bei verschiedenen Temperaturen von Festkörpern oder Filmen.

Beispiele für Anwendungen, in denen die mit dem erfindungsgemäßen Verfahren hergestellten Siliconharzintermediate oder Endprodukte eingesetzt werden können, um die oben bezeichneten Eigenschaften zu manipulieren sind die Herstellung von Beschichtungsstoffen und Imprägnierungen und daraus zu erhaltenden Beschichtungen und Überzügen auf Substraten, wie Metall, Glas, Holz, mineralisches Substrat, Kunst- und Naturfasern zur Herstellung von Textilien, Teppichen, Bodenbelägen, oder sonstigen aus Fasern herstellbaren Gütern, Leder, Kunststoffe wie Folien, Formteilen. Die Siliconharzintermediate oder Endprodukte können in Zubereitungen bei entsprechender Auswahl der Zubereitungskomponenten außerdem als Additiv zum Zecke der Entschäumung, der Verlaufsförderung, Hydrophobierung, Hydrophilierung, Füllstoff- und Pigmentdispergierung, Füllstoff- und Pigmentbenetzung, Substratbenetzung, Förderung der Oberflächenglätte, Reduzierung des Haft- und Gleitwiderstandes auf der Oberfläche der aus der additivierten Zubereitung erhältlichen ausgehärteten Masse eingesetzt werden. Die nach dem erfindungsgemäßen Verfahren hergestellten Siliconharzintermediate und Endprodukte können in flüssiger oder in ausgehärteter fester Form in Elastomermassen eingearbeitet werden. Hierbei kann sie zum Zwecke der Verstärkung oder zur Verbesserung anderer Gebrauchseigenschaften wie der Steuerung der Transparenz, der Hitzebeständigkeit, der Vergilbungsneigung, der Bewitterungsbeständigkeit.

Alle vorstehenden Symbole der vorstehenden Formeln weisen ihre Bedeutungen jeweils unabhängig voneinander auf. In allen Formeln ist das Siliziumatom vierwertig.

Im vorliegenden Text werden Stoffe durch Angabe von Daten charakterisiert, die mittels instrumenteller Analytik erhalten werden. Die zugrundeliegenden Messungen werden entweder öffentlich zugänglichen Normen folgend durchgeführt oder nach speziell entwickelten Verfahren ermittelt. Um die Klarheit der mitgeteilten Lehre zu gewährleisten, sind die verwendeten Methoden hier angegeben:

### Viskosität:

Die Viskositäten werden, wenn nicht anders angegeben, durch rotationsviskosimetrische Messung gemäß DIN EN ISO 3219 bestimmt. Falls nicht anders angegeben, gelten alle Viskositätsangaben bei 25°C und Normaldruck von 1013 mbar.

### Brechungsindex:

Die Brechungsindices werden im Wellenlängenbereich des sichtbaren Lichtes bestimmt, falls nicht anders angegeben bei 589 nm bei 25°C und Normaldruck von 1013 mbar gemäß der Norm DIN 51423.

### Transmission:

Die Transmission wird durch UV VIS Spektroskopie bestimmt. Ein geeignetes Gerät ist beispielsweise das Analytik Jena Specord 200.

Die verwendeten Messparameter sind Bereich: 190 - 1100 nm Schrittweite: 0,2 nm, Integrationszeit: 0,04 s, Messmodus: Schrittbetrieb. Als erstes erfolgt die Referenzmessung (Background). Eine Quarzplatte befestigt an einem Probenhalter (Dimension der Quarzplatten: HxB ca. 6 x 7 cm, Dicke ca 2,3 mm) wird in den Probenstrahlengang gegeben und gegen Luft gemessen. Danach erfolgt die Probenmessung. Eine am Probenhalter befestigte Quarzplatte mit aufgetragener Probe - Schichtdicke aufgetragene Probe ca. 1 mm - wird in den Probenstrahlengang gegeben und gegen Luft gemessen. Interne Verrechnung gegen Backgroundspektrum liefert das Transmissionsspektrum der Probe.

### Molekülzusammensetzungen:

Die Molekülzusammensetzungen werden mittels Kernresonanzspektroskopie bestimmt (zu Begrifflichkeiten siehe ASTM E 386: Hochauflösende magnetische Kernresonanzspektroskopie (NMR): Begriffe und Symbole), wobei der ¹H-Kern und der ²⁹Si-Kern vermessen wird.

### Beschreibung 1H-NMR Messung

| | |
|---|---|
| Solvent: | CDC 13, 99,8%d |
| Probenkonzentration: | ca. 50 mg / 1 ml CDCl3 in 5 mm NMR-Röhrchen |

Messung ohne Zugabe von TMS, Spektrenreferenzierung von Rest-CHCl₃ in CDCl3 auf 7,24 ppm

| | |
|---|---|
| Spektrometer: | Bruker Avance I 500 oder Bruker Avance HD 500 |
| Probenkopf: | 5 mm BBO-Probenkopf oder SMART-Probenkopf (Fa. Bruker) |

Meßparameter:
Pulprog = zg30
TD = 64k
NS = 64 bzw. 128 (abhängig von der Empfindlichkeit des Probenkopfes)
SW = 20,6 ppm
AQ = 3,17 s
D1 = 5 s
SFO1 = 500,13 MHz
O1 = 6,175 ppm

Processing-Parameter:
SI = 32k
WDW = EM
LB = 0,3 Hz

Je nach verwendetem Spektrometertyp sind evtl. individuelle Anpassungen der Messparameter erforderlich.
Beschreibung ²⁹Si-NMR Messung

| | |
|---|---|
| Solvent: | C₆D₆ 99,8%d/CCl4 1:1 v/v mit 1Gew% Cr(acac)3 als Relaxationsreagenz |
| Probenkonzentration: | ca. 2 g / 1,5 ml Solvent in 10 mm NMR-Röhrchen |
| Spektrometer: | Bruker Avance 300 |
| Probenkopf: | 10 mm 1H/13C/15N/29Si glasfreier QNP-Probenkopf (Fa. Bruker) |

Messparameter:
Pulprog = zgig60
TD = 64k
NS = 1024 (abhängig von der Empfindlichkeit des Probenkopfes)
SW = 200 ppm
AQ = 2,75 s
D1 = 4 s
SFO1 = 300,13 MHz
O1 = -50 ppm

Processing-Parameter:
SI = 64k
WDW = EM
LB = 0,3 Hz

Je nach verwendetem Spektrometertyp sind evtl. individuelle Anpassungen der Messparameter erforderlich.

### Molekulargewichtsverteilungen:

Molekulargewichtsverteilungen werden als Gewichtsmittel Mw und als Zahlenmittel Mn bestimmt, wobei die Methode der Gelpermeationschromatographie (GPC bzw. Size Exclusion Chromatographie (SEC)) Anwendung findet mit Polystyrol Standard und Brechnungsindexdetektor (RI-Detektor). Wo nicht anders ausgewiesen wird THF als Eluent verwendet und DIN 55672-1 angewendet. Die Polydispersität (PD) ist der Quotient Mw/Mn.

### Glasübergangstemperaturen:

Die Glasübergangstemperatur wird nach Dynamischer Differenzkalorimetrie (Differential Scanning Calorimetry, DSC) nach DIN 53765, gelochter Tigel, Aufheizrate 10 K/min bestimmt.

### Beispiele:

Im Folgenden wird das erfindungsgemäße Verfahren in Beispielen beschrieben, diese sollen jedoch nicht als darauf beschränkt ausgelegt werden. Alle Prozentangaben beziehen sich auf das Gewicht. Falls nicht anders angegeben werden alle Manipulationen bei Raumtemperatur von etwa 25°C und unter Normaldruck (1,013 bar) ausgeführt. Bei den Apparaten handelt es sich um handelsübliche Laborgeräte wie sie von zahlreichen Geräteherstellern käuflich angeboten werden.
Ph bedeutet einen Phenylrest = C₆H₅-
Me bedeutet einen Methylrest = CH₃-. Me₂ bedeutet entsprechend zwei Methylreste.
ⁱOct bedeutet einen iso-Octyl-Rest, bzw. einen 2,2,4 Trimethylpentyl-Rest, was das gleiche ist.

### Beispiel 1: Erfindungsgemäßes Verfahren, vollkontinuierliche Version. Kombination von Kolonne mit Loop

Als Apparatur wird für die Realisierung der Schritte 1 und 2 eine kontinuierliche Alkoxylierungsanlage verwendet, bestehend aus einem 2,5 l großen Umlaufverdampfer mit aufgesetzter 5 m langer Reaktionskolonne mit einer lichten Weite von 50 mm, gefolgt von einem Loop-Reaktor mit einem Füllvolumen von 1,5 l, in dem der Schritt 3 des Verfahrens abläuft.

Der Umlaufverdampfer wird mit 2000 g Ethanol befüllt und auf eine Sumpftemperatur von 78°C (Rückfluss Ethanol) eingestellt. Der Reaktionsloop mit 1,5 Liter Füllvolumen wird mit einem Gemisch bestehend aus gleichen Gewichtsteilen des aus den Schritten 1 und 2 erhältlichen alkoxyoligomeren Polyorganosiloxans und Ethanol befüllt, auf 60°C erhitzt und dabei umgepumpt.

Auf die Kolonne werden 1500 g/h eines Gemisches bestehend aus 1 Teil IO-Trichlorsilan und 9 Teilen Methyltrichlorsilan dosiert, sowie 500 g /h Ethanol.

In der Kolonne wird das Chlorsilangemisch teilweise durch dampfförmigen Ethanol im Gegenstrom alkoxyliert, wobei die dabei entstehende HCl als Nebenprodukt der Reaktion über eine Abgasleitung entweicht.

Zusätzlich werden dem Reaktionssystem 500 g/h Ethanol und 140 g/h Wasser über den Sumpf der Reaktionskolonne zugeführt und auf Rückfluss (Ethanol SDP: 78°C) erhitzt.

Das Alkylsilantrialkoxylat wird im Sumpf der Reaktionskolonne durch das Wasser zum Oligomer kondensiert. Der Oligomerisierungs- bzw. Polymerisationsgrad ist über die eingesetzte Wassermenge steuerbar.
Das anfallende Kopfdestillat der Reaktionskolonne sogenannter Säurerücklauf) wird kondensiert und kurz unterhalb der Einspeisestelle des Reaktionsgemisches aus dem Vorreaktor auf die Kolonne zurückgegeben. Es wird nicht in den Sumpf der Reaktionskolonne eingespeist oder einer Stelle in der Kolonne, die näher am Sumpf liegt, als die angegebene Dosierstelle. Dies geschieht um zu vermeiden, dass eine zu hohe Menge Säurerücklauf in den Sumpf gelangt und die Kondensationsreaktion dort unkontrollierbar macht.

Somit wird die dabei frei werdende HCl vollständig über Abgasleitung aus dem Reaktionssystem abgeführt mit der Folge dass das aus dem Sumpf der Reaktionskolonne zu entnehmende Siliconharzintermediat ohne weitere Aufarbeitung mit kleiner 100 ppm Rest-HCl-Gehalt (titrierbar) anfällt. Das so im Sumpf der Reaktionskolonnen hergestellte Siliconharzintermediat kann falls gewünscht dem Sumpf der Reaktionskolonne entnommen und analytisch charakterisiert werden. Es zeichnet sich durch niedrige Viskosität (< 100 mm²/s) sowie hohe Restalkoxygehalte von > 20 Gew.% aus.

In einem typischen Beispiel wurden folgende analytische Daten für das Siliconharzintermediat erhalten:
Molekulare Zusammensetzung aus ²⁹Si-NMR:
MeSiO_{3/2} + ⁱOCtSiO_{3/2}: 11,8 mol-%,
MeSi(OEt)O_{2/2} + ⁱOctSi(OEt)O_{3/2}: 50,8 mol-%, MeSi(OMe)₂O_{1/2} + ⁱOctSi(OEt)₂O_{3/2}: 30,0 mol-%, MeSi(OMe)₃ + ⁱOctSi(OEt)₃: 6,4 mol-%
Me₂SiO_{2/2}: 0,8 mol-% (aufgrund von geringen Gehalten von Dimethyldichlorsilan in Methyltrichlorsilan)
Me₂Si(OEt)O_{1/2}: 0,2 mol-% (aufgrund von geringen Gehalten von Dimethyldichlorsilan in Methyltrichlorsilan)
Ethoxygehalt: 34,2 Gew.-%,
Gehalt ⁱOctSi(OEt)₀₋₃O_{3-0/2}: 9,1 Gew.-%
Mw: 4200 g/mol
Mn: 900 g/mol
PD: 4,7

Das Reaktionsprodukt aus dem Sumpf der Reaktionskolonne wird im Maße seiner Bildung in den Reaktionsloop eingeleitet. Dabei besteht das Reaktionsprodukt aus dem Sumpf der Kolonne aus einem Gemisch aus gleichen Teilen Ethanol und Siliconharzintermediat, wie es für die Befüllung des Reaktionsloops verwendet wurde.
Zur Vorlage im Reaktionsloop werden 50 g einer 1,3 Gew.-%-igen wässrigen Salzsäurelösung zudosiert, um die Reaktion zu starten. Das Siliconharzintermediat aus dem Sumpf der Reaktionskolonne wird in Folge zusammen mit salzsaurem Wasser (200 g/h einer 1,3 Gew.-%-igen wässrigen HCl Lösung)in dem Maße in den Reaktionsloop zugeführt, wie kondensiertes Endprodukt aus dem Reaktionsloop abgeführt wird.
Dabei sind die Eduktströme so bemessen dass sich eine mittlere Verweilzeit von 15 Minuten sowie ein Festgehalt (gelöstes Harz in Alkohol) von 35-40% einstellt.
Das so entstandene kondensierte, HCl-saure Loop-Endrodukt wird mittels einer 30%-igen Lösung Natriummethylat in Methanol neutralisiert und anschließend filtriert.

Danach wird die alkoholische Endproduktlösung destilliert und man erhält ein flüssiges Endprodukt das sich durch Produktparameter wie Viskosität, Restalkoxygehalt sowie Molekulargewichts-verteilung definiert. In einem typischen Beispiel wurden folgende analytischen Daten erhalten:
Molekulare Zusammensetzung aus 29Si-NMR:
MeSiO_{3/2} + ⁱOctSiO_{3/2}: 50,0 mol-%,
MeSi(OEt)O_{2/2} + ⁱOctSi(OEt)O_{3/2}: 44,5 mol-%,
MeSi(OMe)₂O_{1/2} + ⁱOctSi(OEt)₂O_{3/2}: 4,5 mol-%,
MeSi(OMe)₃ + ⁱOctSi(OEt)₃: 0,2 mol-%
Me₂SiO_{2/2}: 0,8 mol-% (aufgrund von geringen Gehalten von Dimethyldichlorsilan in Methyltrichlorsilan)
Me₂Si(OEt)O_{1/2}: 0,0 mol-% (aufgrund von geringen Gehalten von Dimethyldichlorsilan in Methyltrichlorsilan)
Ethoxygehalt: 17,0 Gew.-%,
Gehalt ⁱOctSi(OEt)₀₋₃O_{3-0/2}: 8,9 Gew.-%
weitere Produktparameter:

| | |
|---|---|
| Viskosität: | 3600 mm²/s |
| Mw: | 8200 g/mol |
| Mn: | 1900 g/mol |
| PD: | 4,3 |

### Beispiel 2: Erfindungsgemäßes Verfahren, teilkontinuierliche Version. Kombination von Kolonne und Rührwerk.

2744,29 g der ethanolischen Lösung des Siliconharzintermediat aus dem Sumpf der Reaktionskolonne aus Schritt 1, Beispiel 1 werden in einem 5 l Rührgefäß mit 83,16 g Wasser und 2,31 g 20%-iger wässriger Salzsäure vermischt. Die Mischung wird auf 80°C aufgeheizt, so dass sich ein Rückfluss aus Ethanol bildet. Bei dieser Temperatur wird 2 Stunden lang gerührt. Anschließend wird auf 60°C abgekühlt und danach 2,31 g Natriummethylatlösung (30%-ig in Methanol) zugegeben. Der Restsalzsäuregehalt wird durch Titration gegen Phenolphthalein bestimmt und beträgt 5 ppm. Anschließend werden alle flüchtigen Bestandteile bei 80°C und 10 mbar Unterdruck abdestilliert und das erhaltene Endprodukt durch eine Druckfilternutsche durch eine Filterplatte mit 100µm Porenweite filtriert. Man erhält 1100 g eines klaren flüssigen Produktes, das folgende Eigenschaften und Zusammensetzung aufweist:
Viskosität: 3100 mm²/s

Molekulargewicht und Uneinheitlichkeit:
Mw = 8350 g/mol
Mn = 1190 g/mol
PD = 7,0

Molekulare Zusammensetzung aus ²⁹Si-NMR:
MeSiO_{3/2} + ⁱOctSiO_{3/2}: 49,4 mol-%,
MeSi(OEt)O_{2/2} + ⁱOctSi(OEt)O_{3/2}: 46,9 mol-%,
MeSi(OMe)₂O_{1/2} + ⁱOctSi(OEt)₂O_{3/2}: 3,7 mol-%,
Ethoxygehalt: 16,9 Gew.-%,
0,56% siliziumgebundene OH-Gruppen

### Beispiel 3: Erfindungsgemäßes Verfahren, teilkontinuierliche Version. Kombination von Kolonne und Rührwerk mit MSE 110.

Der erste Schritt wird ausgeführt wie in Beispiel 1 beschrieben, wobei statt der in Beispiel 1 verwendeten Silane Methyltrichlorsilan und Isooctyltrichlorsilan nun ausschließlich Methyltrichlorsilan verwendet wird. Statt Ethanol wird als Prozessalkohol Methanol verwendet, die Temperatur auf der Reaktionskolonne beträgt statt 78°C nun 64°C. Alle übrigen Parameter werden so gewählt wie in Beispiel 2. Man erhält ein Siliconharzintermediat gelöst in Methanol, Konzentration 51%. Es hat in isolierter Form nach Abdestillieren aller flüchtigen Bestandteile bei 80°C und 10 mbar Unterdruck folgende Zusammensetzung:
MeSiO_{3/2}: 29,7 mol.-%,
MeSi(OMe)O_{2/2}: 55,9 mol.-%,
MeSi(OMe)₂O_{1/2}: 12,9 mol.-%,
MeSi(OMe)₃: 0,9 mol.-%
Me₂SiO_{2/2}: 0,6 mol.-%,
Methoxygehalt: 30,3 Gew.-%,
keine Silanolgruppen nachweisbar.
Mw = 2100 g/mol
Mn = 700 g/mol
PD = 3,0

Im zweiten Schritt wird das Siliconharzintermediat aus dem ersten Schritt in einem gerührten und beheizbaren Batch-Reaktor mit einem Reaktionsvolumen von einem Liter kontinuierlich in einer Rate von 1250 g/h zugeführt. In einer zweiten Dosierung werden kontinuierlich 700 g/h von einem Gemisch aus 2500 g Methanol, 300 g teilentsalztes Wasser und 15,2 g 20%ige Salzsäure zugeführt. Die Reaktion wird am Rückfluß betrieben. Aus dem Reaktor werden kontinuierlich 1950 g/h Reaktionsgemisch in ein weiteres gerührtes Gefäß gepumpt und kontinuierlich mit 4,15 g/h 25%ige Natriummethylatlösung in Methanol vermischt. Eine Probe aus dem gerührten Gefäß hat einen HCl-Wert von 25 mg HCl/kg. Die Probe (=Endprodukt) ist nach dem Entflüchtigen im Rotationsverdampfer bei 100°C und 20 mbar ein in Toluol lösliches, hochviskoses Harz mit einem Methoxygehalt von 13,7 Gew.-% und einem Silanolgehalt von 1,5 Gew.-%.
MeSiO_{3/2}: 53,2 mol.-%,
MeSi(OMe)O_{2/2}: 44,3 mol.-%,
MeSi(OMe)₂O_{1/2}: 1,7 mol.-%,
MeSi(OMe)₃: 0,2 mol.-%
Me₂SiO_{2/2}: 0,6 mol.-%
Mw = 4700 g/mol
Mn = 1100 g/mol
PD = 4,3

## Patentansprüche

1. Voll-kontinuierliches Verfahren zur Herstellung von verzweigten Organopolysiloxanen, wobei
- in einem ersten Schritt in einer Kolonne als erste Reaktionseinheit kontinuierlich mindestens ein Chlorsilan mit Alkohol zu einem niedrigkondensierten Polyorganosiloxangemisch (=Siliconharzintermediat) umgesetzt wird, wobei die Umsetzung
a) mit Alkohol und Wasser, oder
b) mit Alkohol, Wasser und mindestens einem weiteren Chlorsilan, das sich vom ersten Chlorsilan wie folgt unterscheidet:
- es ist schwerer flüchtig, hat also einen höheren Siedepunkt und
- kann zudem eine geringere Reaktivität aufweisen, erfolgt und
c) 0,1 bis 2,0 Mol Alkohol je Mol hydrolysierbares Chlor eingesetzt wird, und
d) der Alkohol höchstens 5 Gew.% Wasser enthält, und
- in einem zweiten Schritt das Siliconharzintermediat aus dem ersten Schritt in einen kontinuierlichen Loop Reaktor, oder einen gerührtem Batch Reaktor mit kontinuierlichem Zulauf und Ablauf oder einer kontinuierlich geschalteten Rührwerkskaskade als zweite Reaktionseinheit überführt wird, und dort eine Umsetzung
a) mit Alkohol und Wasser und in Gegenwart katalytischer Spuren Chlorwasserstoffs, oder
b) mit Alkohol und Wasser und in Gegenwart katalytischer Spuren Chlorwasserstoffs und unter Zugabe weiterer alkoxy- und/oder hydroxyfunktionellen Organopolysiloxane oder alkoxy- und/oder hydroxyfunktionellen Silane,
zum Endprodukt, einem verzweigten Organopolysiloxan mit gewünschtem Kondensationsgrad, erfolgt,
mit der Maßgabe, dass während des gesamten Verfahrens außer dem verwendeten Alkohol kein anderes Lösemittel eingesetzt wird, wobei dieser Alkohol aus nur einer Art Alkohol bestehen kann oder aus einem Gemisch aus mindestens zwei verschiedenen Alkoholen.

2. Teil-kontinuierliches Verfahren zur Herstellung von verzweigten Organopolysiloxanen, wobei
- in einem ersten Schritt in einer Kolonne als erste Reaktionseinheit kontinuierlich mindestens ein Chlorsilan zu einem niedrigkondensierten Polyorganosiloxangemisch (=Siliconharzintermediat) umgesetzt wird, wobei die Umsetzung
a) mit Alkohol und Wasser, oder
b) mit Alkohol, Wasser und mindestens einem weiteren Chlorsilan, das sich vom ersten Chlorsilan wie folgt unterscheidet:
- es ist schwerer flüchtig, hat also einen höheren Siedepunkt und
- kann zudem eine geringere Reaktivität aufweisen, erfolgt, und
c) 0,1 bis 2,0 Mol Alkohol je Mol hydrolysierbares Chlor eingesetzt wird, und
d) der Alkohol höchstens 5 Gew.% Wasser enthält, und
- in einem zweiten Schritt das Siliconharzintermediat aus dem ersten Schritt in einen gerührten diskontinuierlich betriebenen Batch Reaktor als zweite Reaktionseinheit überführt wird, und dort eine Umsetzung
a) mit Alkohol und Wasser und in Gegenwart katalytischer Spuren Chlorwasserstoffs, oder
b) mit Alkohol und Wasser und in Gegenwart katalytischer Spuren Chlorwasserstoffs und unter Zugabe weiterer alkoxy- und/oder hydroxyfunktionellen Organopolysiloxane oder alkoxy- und/oder hydroxyfunktionellen Silane,
zum Endprodukt, einem verzweigten Organopolysiloxan mit gewünschtem Kondensationsgrad, erfolgt,
mit der Maßgabe, dass während des gesamten Verfahrens außer dem verwendeten Alkohol kein anderes Lösemittel eingesetzt wird, wobei dieser Alkohol aus nur einer Art Alkohol bestehen kann oder aus einem Gemisch aus mindestens zwei verschiedenen Alkoholen.

3. Verfahren gemäß einem der Ansprüche 1 oder 2, **dadurch gekennzeichnet, dass** der Alkohol in Schritt 1 höchstens 4 Gew.-% Wasser enthält.

4. Verfahren gemäß einer der Ansprüche 1 bis 3 **dadurch gekennzeichnet, dass**
das im ersten Schritt anfallende salzsäurehaltige Kopfdestillat der Kolonne kondensiert und kurz unterhalb der Einspeisestelle des Reaktionsgemisches aus dem Vorreaktor auf die Kolonne zurückgegeben wird, so dass es nicht in den Sumpf der Kolonne gelangt und somit die in der Kolonne frei werdende Salzsäure vollständig aus dem Reaktionssystem abgeführt wird, und dadurch das Siliconharzintermediat im Sumpf der Reaktionskolonne ohne weitere Aufarbeitung mit weniger 100 ppm Rest-Salzsäure-Gehalt anfällt.

## Claims

1. Fully continuous process for the production of branched organopolysiloxanes, wherein
- in a first step in a column as first reaction unit at least one chlorosilane is continuously reacted with alcohol to give a polyorganosilane mixture of low degree of condensation (= silicone resin intermediate), wherein the reaction takes place
a) with alcohol and water, or
b) with alcohol, water and at least one further chlorosilane, which differs from the first chlorosilane as follows:
- it is less volatile, thus has a higher boiling point and
- can moreover have a lower reactivity, and
c) 0.1 to 2.0 moles alcohol are used per mole of hydrolyzable chlorine, and
d) the alcohol contains at most 5 wt.% water, and
- in a second step the silicone resin intermediate from the first step is transferred into a continuous loop reactor, or a stirred batch reactor with continuous input and output or a continuously connected stirring device cascade as the second reaction unit, and there a reaction takes place
a) with alcohol and water and in the presence of catalytic traces of hydrogen chloride, or
b) with alcohol and water and in the presence of catalytic traces of hydrogen chloride and with addition of further alkoxy- and/or hydroxy-functionalized organopolysiloxanes or alkoxy- and/or hydroxy-functionalized silanes,
takes place to give the end product, a branched organopolysiloxane with the desired degree of condensation,
with the proviso that during the whole process apart from the alcohol used no other solvent is used,
wherein this alcohol can consist of only one type of alcohol or of a mixture of at least two different alcohols.

2. Partially continuous process for the production of branched organopolysiloxanes, wherein
- in a first step in a column as first reaction unit at least one chlorosilane is continuously reacted to give a polyorganosilane mixture of low degree of condensation (= silicone resin intermediate), wherein the reaction takes place
a) with alcohol and water, or
b) with alcohol, water and at least one further chlorosilane, which differs from the first chlorosilane as follows:
- it is less volatile, thus has a higher boiling point and
- can moreover have a lower reactivity, and
c) 0.1 to 2.0 moles alcohol are used per mole of hydrolyzable chlorine, and
d) the alcohol contains at most 5 wt.% water, and
- in a second step the silicone resin intermediate from the first step is transferred into a stirred discontinuously operated batch reactor as the second reaction unit, and there a reaction takes place
a) with alcohol and water and in the presence of catalytic traces of hydrogen chloride, or
b) with alcohol and water and in the presence of catalytic traces of hydrogen chloride and with addition of further alkoxy- and/or hydroxy-functionalized organopolysiloxanes or alkoxy- and/or hydroxy-functionalized silanes,
to give the end product, a branched organopolysiloxane with the desired degree of condensation,
with the proviso that during the whole process apart from the alcohol used no other solvent is used,
wherein this alcohol can consist of only one type of alcohol or of a mixture of at least two different alcohols.

3. Process according to either of Claims 1 and 2, **characterized in that** the alcohol in step 1 contains at most 4 wt.% water.

4. Process according to one of Claims 1 to 3, **characterized in that**
the hydrochloric acid-containing head distillate of the column arising in the first step is condensed and fed back onto the column a short distance below the feed point of the reaction mixture from the pre-reactor, so that it does not reach the bottom of the column and thus the hydrochloric acid liberated in the column is wholly removed from the reaction system and as a result the silicone resin intermediate in the bottom of the reaction column without further workup accumulates with less than 100 ppm residual hydrochloric acid content.

## Revendications

1. Procédé entièrement continu pour la fabrication d'organopolysiloxanes ramifiés, selon lequel
- lors d'une première étape dans une colonne en tant que première unité de réaction, au moins un chlorosilane est mis en réaction en continu avec un alcool pour former un mélange de polyorganosiloxanes faiblement condensés (= intermédiaire résine de silicone), la réaction ayant lieu
a) avec un alcool et de l'eau, ou
b) avec un alcool, de l'eau et au moins un autre chlorosilane qui diffère du premier chlorosilane en ce que :
- il est moins volatil, c'est-à-dire qu'il a un point d'ébullition plus élevé et
- il peut en outre présenter une réactivité plus faible, et
c) 0,1 à 2,0 moles d'alcool est utilisé par mole de chlore hydrolysable, et
d) l'alcool contient au plus 5 % en poids d'eau, et
- lors d'une deuxième étape, l'intermédiaire résine de silicone de la première étape est transféré dans un réacteur à boucle continu ou un réacteur discontinu agité avec alimentation et évacuation continues, ou une cascade d'agitateurs raccordés en continu en tant que deuxième unité de réaction, et une réaction
a) avec un alcool et de l'eau et en présence de traces catalytiques de chlorure d'hydrogène, ou
b) avec un alcool et de l'eau et en présence de traces catalytiques de chlorure d'hydrogène et avec ajout d'autres organopolysiloxanes à fonction alcoxy et/ou hydroxy ou silanes à fonction alcoxy et/ou hydroxy,
y a lieu pour former le produit final, un organopolysiloxane ramifié ayant le degré de condensation souhaité,
à condition que pendant l'ensemble du procédé, aucun autre solvant que l'alcool utilisé ne soit utilisé, cet alcool pouvant n'être constitué que d'un type d'alcool ou d'un mélange d'au moins deux alcools différents.

2. Procédé partiellement continu pour la fabrication d'organopolysiloxanes ramifiés, selon lequel
- lors d'une première étape dans une colonne en tant que première unité de réaction, au moins un chlorosilane est mis en réaction en continu pour former un mélange de polyorganosiloxanes faiblement condensés (= intermédiaire résine de silicone), la réaction ayant lieu
a) avec un alcool et de l'eau, ou
b) avec un alcool, de l'eau et au moins un autre chlorosilane qui diffère du premier chlorosilane en ce que :
- il est moins volatil, c'est-à-dire qu'il a un point d'ébullition plus élevé et
- il peut en outre présenter une réactivité plus faible, et
c) 0,1 à 2,0 moles d'alcool est utilisé par mole de chlore hydrolysable, et
d) l'alcool contient au plus 5 % en poids d'eau, et
- lors d'une deuxième étape, l'intermédiaire résine de silicone de la première étape est transféré dans un réacteur discontinu agité exploité de manière discontinue en tant que deuxième unité de réaction, et une réaction
a) avec un alcool et de l'eau et en présence de traces catalytiques de chlorure d'hydrogène, ou
b) avec un alcool et de l'eau et en présence de traces catalytiques de chlorure d'hydrogène et avec ajout d'autres organopolysiloxanes à fonction alcoxy et/ou hydroxy ou silanes à fonction alcoxy et/ou hydroxy,
y a lieu pour former le produit final, un organopolysiloxane ramifié ayant le degré de condensation souhaité,
à condition que pendant l'ensemble du procédé, aucun autre solvant que l'alcool utilisé ne soit utilisé, cet alcool pouvant n'être constitué que d'un type d'alcool ou d'un mélange d'au moins deux alcools différents.

3. Procédé selon l'une quelconque des revendications 1 ou 2, **caractérisé en ce que** l'alcool à l'étape 1 contient au plus 4 % en poids d'eau.

4. Procédé selon l'une quelconque des revendications 1 à 3, **caractérisé en ce que** le distillat de tête de la colonne contenant de l'acide chlorhydrique formé lors de la première étape est condensé et réintroduit dans la colonne juste en dessous de l'emplacement d'introduction du mélange réactionnel issu du pré-réacteur, de telle sorte qu'il n'atteigne pas le fond de la colonne et que l'acide chlorhydrique libéré dans la colonne soit ainsi entièrement évacué du système de réaction, et de telle sorte que l'intermédiaire résine de silicone se forme dans le fond de la colonne de réaction sans traitement supplémentaire avec une teneur résiduelle en acide chlorhydrique inférieure à 100 ppm.
